Europäisches Patentamt

European Patent Office

Office européen des brevets

(11) Publication number: **0 496 184 A1**

# EUROPEAN PATENT APPLICATION

(21) Application number: **91830023.7**

(22) Date of filing: **25.01.91**

(51) Int. Cl.5: **B64G 1/28**

(43) Date of publication of application:
**29.07.92 Bulletin 92/31**

(84) Designated Contracting States:
**BE DE DK ES FR GB GR IT LU NL**

(71) Applicant: **CONTRAVES ITALIANA S.p.A.**
**Via Affile 102**
**I-00131 Roma(IT)**

(72) Inventor: **Stella, Domenico**
**Via Sorelle Tetrazzini 47/C**
**I-00139 Roma(IT)**

(74) Representative: **Forattini, Amelia et al**
**c/o Internazionale Brevetti Ingg. ZINI,**
**MARANESI & C. S.r.l. Piazza Castello 1**
**I-20121 Milano(IT)**

(54) **Attitude control actuator, particularly for spacecrafts.**

(57) An attitude control actuator, particularly for spacecrafts, includes a frame (3), two flywheels (7,9) driven by respective motors with opposite and equal spins, and supported by gimbals journaled on the frame about respective parallel axes at right angles to the axes of the flywheels, and motors for rotating the gimbals through desired angular displacements about their journal axes. The frame is pivoted to a support member (5) rigidly associated to the spacecraft and is capable of a rotation of 90° in order to control the attitude of the spacecraft, with respect to any desired direction, with just one dual flywheel frame.

Fig.1

The present invention relates to an attitude control actuator, particularly for spacecrafts.

Attitude control systems employing gyroscopes are known wherein oppositely spinning gyroscope rotors are employed. A matched pair of gyroscopes, having oppositely spinning rotors are arranged so that the gimbal rings or frames, in which the rotors are mounted, may be rotated equally and oppositely with respect to each other to produce torque along an axis disposed at right angles both to the axes about which the gimbal rings or frames are turned and to the axes of the spinning rotors mounted therein.

US-3,280,644, US-3,439,548 and US-3,158,340, as well as a European patent application EP-A-0392130 filed by this same applicant, disclose gyroscopic control devices of the above type. The pair of gyroscopes is mounted in a common frame having a longitudinal axis about which torque is produced when the oppositely spinning rotors are given equal and opposite angular displacements with respect to each other.

All the above systems require that at least three gyroscope units be provided on a satellite or vehicle; in particular, each unit frame has to be disposed along one of the principal axes of the vehicle so as to influence its attitude with regard to roll, pitch and yaw, as desired.

The aim of the present invention is to provide an attitude control actuator capable of generating torques for influencing the position of a vehicle in any direction, by using only one gyroscope unit, instead of three.

Within this aim, an object of the invention is that of providing an attitude control actuator adapted to operate using power collected exclusively from solar panels.

The above aim, as well as this and other objects that will be more apparent later, are achieved by an attitude control actuator, particularly for spacecrafts, comprising a frame, two flywheels driven by respective motors with opposite and equal spins, and supported by gimbals journaled on said frame about respective parallel axes at right angles to the axes of said flywheels, motor means for rotating the gimbals through desired angular displacements about their journal axes, characterized in that said frame is pivoted to a support member rigidly associated to said spacecraft, said frame being capable of a rotation of 90° in order to control the attitude of said spacecraft, with respect to any desired direction, with just one of said frame having two flywheels.

Further characteristics and advantages of the invention will be more apparent from the following description of an embodiment of the invention, illustrated,by way of example in the enclosed drawings in which:

Fig. 1 is a schematic isometric view showing the actuator according to the invention;

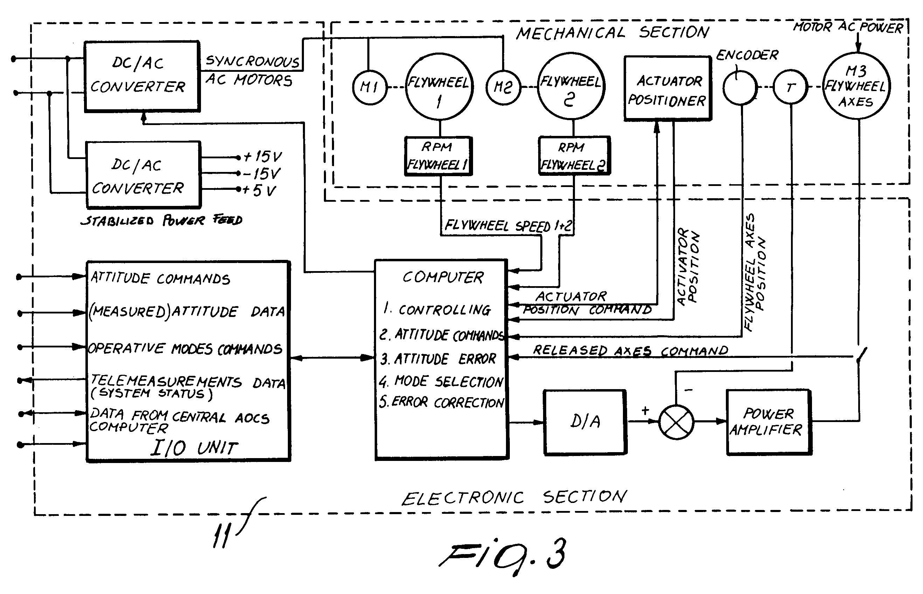

Fig. 2 is a view similar to the preceding one, showing the actuator in the process of generating torque in the y direction;
Fig. 3 shows an operation diagram of the actuator.

With reference to the drawings, the actuator, according to the invention, generally designated by the reference numeral 1, comprises a dual flywheel frame 3 pivoted on a support member 5, which is rigidly associated with a spacecraft, or vehicle in general.

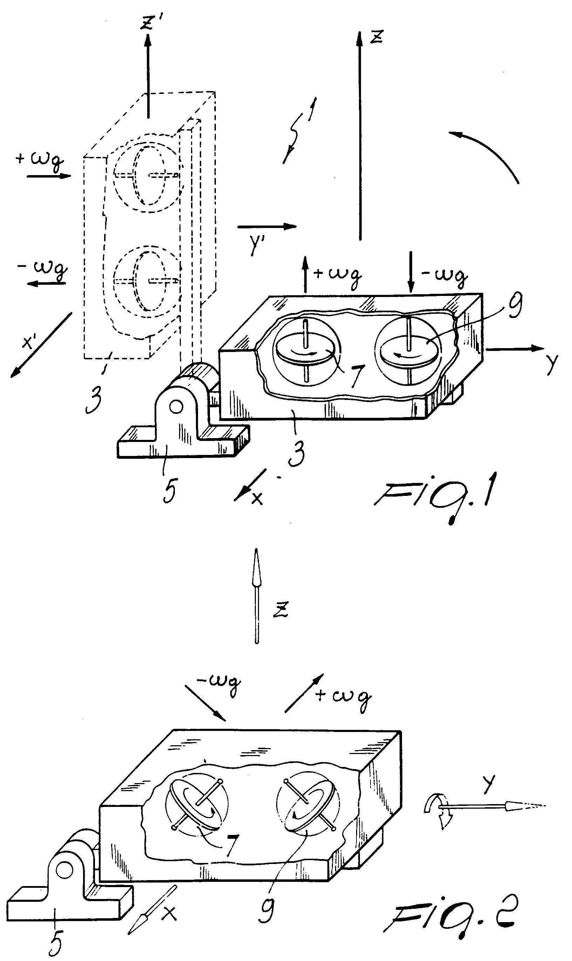

The dual flywheel frame 3 can rotate about support member 5 through an angle of 90°, as illustrated in Fig. 1, while the support member 5 remains fixed with respect to the vehicle frame.

In the dual flywheel frame, a first flywheel member 7 and a second flywheel member 9 are driven by associated motors (not illustrated in the drawings) in opposite directions and equal spins. The flywheel members 7,9 are supported by gimbals journaled on frame 3 about the respective parallel axes (not shown), lying at rigth angles to the axes of the flywheel, in a per se known manner.

Servomotors, (not illustrated) turn the gimbals up the desired angular position about their journal axes; the angles are evaluated either by local computer, as described hereinafter, which directly receives data representing the requested frame position, and by the AOCS computer, which receives data about the present spacecraft position from sensors.

The operation of the described unit as an actuator is based on the fact that, when the flywheels are spinning at the same angular velocity and opposite directions about parallel axes, by turning the frame about any axis in an arbitrary direction, the inertia reaction torque turns out to be the same as without any spinning flywheel.

This happens because the angular momenta stored in the spinning flywheels being opposite, cancel each other. However, a reaction torque is always generated by the moment of inertia of the unit, when this is accelerated and stopped at 90 . The impulse generally turns out to be very low in comparison to the spacecraft moment of inertia (the moment of inertia ratio is in the order of $10^{-5}$) and, as a consequence, the effect of the actuator displacement, with respect to the spacecraft structure, can be ignored.

On the contrary, damping devices and soft bumpers must be provided near the stop points at the 90° position of the frame, in order to prevent strong reactions on the flywheel bearings.

The use of a single dual flywheel unit, which takes only two positions, is based on the Euler angles: a sequence of three rotations about two axes are requested in order to reach any selected attitude.

The necessary computations can be carried out either by the AOCS main computer or by the DFA computer and applied directly to the actuator.

We note that, in case that only one direction is requested (e.g. an optical instrument has to be aimed at a fixed target) and not a three axis attitude, the Euler angle can be reduced to just two.

Tracking a moving target is possible because, generally being the motion nearly on a straight line, it is possible to install the sensor axis parallel to one of the axes controlled by the actuator, and to position the other axis perpendicularly to the trajectory, pointing the sensor axis on the target controlling the turning velocity by the actuator.

The dual flywheel frame 3 will be pivoted to the support 5 so that it will take two positions at 90° to each other. The unit will be mounted so that the two directions taken by the support will be parallel to the axis of maximum and minimum moment of inertia of the spacecraft, in order to turn it around the axes of maximum stability.

A solenoid means may be provided for turning the frame on the support.

Fig. 3 shows a possible operation diagram of the actuator according to the invention, wherein a computer means 11 takes care of the following operations:

- input/output of telemetry data and commands;
- error measurements between requested and present position;
- sequence data of the Euler angles necessary to the spacecraft to reach the requested position;
- speed control of the two flywheels;
- power supply current and voltage control;
- control of the proportionality of the command signal with respect to the torque generated by the motor, in order that the servosystem loop may have the same gain in every position of the gimbal;
- control of the torque for a rapid deduction of the nutation phenomenon about the two stability axes. The instability on the third axis can also be compensated, because the third axis is always orthogonal to the torque generated by the actuator on any of the two other axes.

The actuator according to the invention may have numerous modifications and variations, all within the inventive concept; furthermore, all the details may be substituted with technically equivalent elements.

The materials employed, as well as the dimensions, may be any according to the specific needs and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Attitude control actuator, particularly for spacecrafts, comprising a frame (3), two flywheels (7,9) driven by respective motors with opposite and equal spins, and supported by gimbals journaled on said frame about respective parallel axes at right angles to the axes of said flywheels, motor means for rotating the gimbals through desired angular displacements about their journal axes, characterized in that said frame is pivoted to a support member (5) rigidly associated to said spacecraft, said frame being capable of a rotation of 90° in order to control the attitude of said spacecraft, with respect to any desired direction, with just one of said frame having two flywheels.

2. Attitude control actuator, according to claim 1, characterized in that it comprises a computer means for controlling the motions of said flywheel and said frame.

Fig.1

Fig.2

4

FIG. 3

EP 0 496 184 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | GB-A-2182624 (RCA CORPORATION)<br>* page 2, lines 65 - 79 *<br>* page 3, lines 21 - 43 *<br>* page 3, lines 87 - 108; figures 1, 3, 5 * | 1-2 | B64G1/28 |
| Y | US-A-4688746 (COOPER)<br>* column 1, line 53 - column 2, line 27 *<br>* column 3, line 25 - column 4, line 22; figures 1-4 * | 1-2 | |
| A,D | US-A-3439548 (HORVATH)<br>* column 1, lines 12 - 21; claim 1; figure 1 * | 1 | |
| A,D | US-A-3158340 (SELLERS)<br>* column 3, lines 6 - 38; figure 1 * | 1 | |
|  |  |  | TECHNICAL FIELDS SEARCHED (Int. Cl.5 ) |
|  |  |  | B64G<br>G05D<br>G01C |

The present search report has been drawn up for all claims

| Place of search | Date of completion of the search | Examiner |
|---|---|---|
| THE HAGUE | 20 AUGUST 1991 | RIVERO C.G. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)